# EUROPEAN PATENT APPLICATION

(11) **EP 4 628 231 A1**
(43) Date of publication of application: **08.10.2025**
(21) Application number: 23897687.2
(22) Date of filing: 24.11.2023
(51) Int. Cl.: B22C 1/22, C08K 3/32, C08K 5/1535, C08L 61/00

(54) **BINDER COMPOSITION FOR CASTING MOLD**

(30) Priority: 29.11.2022 JP 2022189737
(71) Applicant: Kao Corporation, Chuo-ku, Tokyo 103-8210 (JP)
(72) Inventor: YAMAGUCHI,Daisuke, Toyohashi-shi, Aichi 441-8074 (JP); MATSUO,Toshiki, Toyohashi-shi, Aichi 441-8074 (JP); TANAKA,Hiroki, Toyohashi-shi, Aichi 441-8074 (JP)
(74) Representative: Hoffmann Eitle
(86) International application number: PCT/JP2023/042201
(87) International publication number: WO 2024/117039

(57) **Abstract**

The present invention is a binder composition for making foundry molds, the binder composition including: furfuryl alcohol; a furan resin; water; and a phosphate, the binder composition satisfying Conditions (1) to (4) described below: Condition (1): the binder composition has a content of furfuryl alcohol of more than 0 mass% and 30 mass% or less, Condition (2): the binder composition has a content of the furan resin of 20 mass% or more and 60 mass% or less, Condition (3): the binder composition has a content of water of 5 mass% or more and 30 mass% or less, and Condition (4): the phosphate includes an amine phosphate. According to the present invention, it is possible to provide a binder composition for making foundry molds that contains a furan resin produced using phosphoric acid as an acid catalyst, has a small content of furfuryl alcohol, and is capable of suppressing precipitation of an insoluble phosphate while suppressing thickening at the time of storage of the binder composition for making foundry molds.

## Description

### TECHNICAL FIELD

The present invention relates to a binder composition for making foundry molds.

### BACKGROUND ART

An acid-hardening mold is generally produced by supplying a binder composition for making foundry molds and a curing agent composition to a kneader through piping by a supply device, kneading them with refractory particles, filling the thus obtained mixed sand composition into an original pattern such as a wooden pattern, and hardening the acid-hardening resin. Examples of the acid-hardening resin to be used include a furan resin and a phenolic resin. Examples of the furan resin to be used include a furfuryl alcohol-urea-formaldehyde resin, a furfuryl alcohol-formaldehyde resin, a furfuryl alcohol-phenolformaldehyde resin, and other known denatured furan resins. Such a mold production method is widely used to produce castings such as machine parts, construction machine parts, and automobile parts because molding can be performed with a high degree of freedom and high-quality castings can be produced due to excellent thermal properties of molds.

An important requirement for producing a mold is an improvement in the working environment where the mold is produced (when the resin is being hardened). In particular, a reduction of furfuryl alcohol in a binder composition for making foundry molds is desired to reduce the amount of furfuryl alcohol and formaldehyde that volatilizes in the production of the mold.

For example, JP-A-2014-501175 discloses that release of furfuryl alcohol and formaldehyde at the time of kneading or making foundry molds can be reduced by using a binder composition containing monomeric furfuryl alcohol at a small content.

Meanwhile, a binder composition for making foundry molds that contains a furan resin is used in a wide range of climates from cold to warm regions. However, under a high-temperature environment during summer in a warm region (for example, 35°C or higher), there is a problem of storage stability, that is, thickening. Thickening changes handleability at the time of making foundry molds, and therefore from the viewpoint of quality control of the molds, setting change or the like, which is troublesome, is sometimes to be performed in equipment such as a liquid feeding pump. In particular in a binder composition for making foundry molds that has a reduced content of furfuryl alcohol as in JP-T-2014-501175, the thickening at the time of storage is larger than that in a binder composition for making foundry molds that contains a large amount of furfuryl alcohol. This is considered to be because the binder composition contains a large amount of an oligomer component such as a urea-modified furan resin instead of the reduced furfuryl alcohol and thus a condensation reaction proceeds during storage to increase the molecular weight, and a means for suppression of thickening is required.

For example, JP-A-2012-135778 discloses that if a binder composition for making foundry molds contains a metal hydroxide, thickening of the binder composition can be suppressed.

A urea-modified furan resin, a furfuryl alcohol/formaldehyde condensate, or the like, which is a main component of a furan resin, is obtained by reacting furfuryl alcohol with urea or formaldehyde in the presence of an acid catalyst.

For example, JP-A-2011-147999 discloses that inorganic acids such as hydrochloric acid and phosphoric acid, in addition to sulfonic acids such as **p-**toluenesulfonic acid and xylene sulfonic acid and organic carboxylic acids such as glutaric acid and succinic acid, can be used as an acid catalyst.

### SUMMARY OF THE INVENTION

The present invention is a binder composition for making foundry molds, the binder composition including:
furfuryl alcohol;
a furan resin;
water; and
a phosphate,
the binder composition satisfying Conditions (1) to (4) described below:
   Condition (1): the binder composition has a content of furfuryl alcohol of more than 0 mass% and 30 mass% or less,
   Condition (2): the binder composition has a content of the furan resin of 20 mass% or more and 60 mass% or less,
   Condition (3): the binder composition has a content of water of 5 mass% or more and 30 mass% or less, and
   Condition (4): the phosphate includes an amine phosphate.

Also, the present invention is a composition for making foundry molds, the composition including:
the binder composition for making foundry molds; and
a curing agent composition containing a curing agent capable of hardening the binder composition for making foundry molds.

Also, the present invention is a composition for foundry molds, the composition including:
refractory particles;
the binder composition for making foundry molds; and
a curing agent composition containing a curing agent capable of hardening the binder composition for making foundry molds.

Also, the present invention is a method for producing a foundry mold, the method including:
a mixing step of mixing refractory particles, the binder composition for making foundry molds, and a curing agent composition containing a curing agent capable of hardening the binder composition for making foundry molds to obtain a composition for foundry molds; and
a hardening step of filling a mold with the composition for foundry molds and hardening the composition for foundry molds.

### DETAILED DESCRIPTION OF THE INVENTION

It has been found that if a metal oxide is contained in a binder composition for making foundry molds that contains a furan resin produced using phosphoric acid as an acid catalyst and has a small content of furfuryl alcohol in order to suppress thickening of the binder composition for making foundry molds, the metal oxide and the phosphoric acid form an insoluble salt and precipitate and thus defects may be caused in a supply device and piping at the time of producing a foundry mold.

The present invention provides a binder composition for making foundry molds that contains a furan resin produced using phosphoric acid as an acid catalyst, has a small content of furfuryl alcohol, and is capable of suppressing precipitation of an insoluble phosphate while suppressing thickening at the time of storage of the binder composition for making foundry molds, a composition for making foundry molds, a composition for foundry molds, and a method for producing a foundry mold.

The present invention is a binder composition for making foundry molds, the binder composition including:
furfuryl alcohol;
a furan resin;
water; and
a phosphate,
the binder composition satisfying Conditions (1) to (4) described below:
   Condition (1): the binder composition has a content of furfuryl alcohol of more than 0 mass% and 30 mass% or less,
   Condition (2): the binder composition has a content of the furan resin of 20 mass% or more and 60 mass% or less,
   Condition (3): the binder composition has a content of water of 5 mass% or more and 30 mass% or less, and
   Condition (4): the phosphate includes an amine phosphate.

Also, the present invention is a composition for making foundry molds, the composition including:
the binder composition for making foundry molds; and
a curing agent composition containing a curing agent capable of hardening the binder composition for making foundry molds.

Also, the present invention is a composition for foundry molds, the composition including:
refractory particles;
the binder composition for making foundry molds; and
a curing agent composition containing a curing agent capable of hardening the binder composition for making foundry molds.

Also, the present invention is a method for producing a foundry mold, the method including:
a mixing step of mixing refractory particles, the binder composition for making foundry molds, and a curing agent composition containing a curing agent capable of hardening the binder composition for making foundry molds to obtain a composition for foundry molds; and
a hardening step of filling a mold with the composition for foundry molds and hardening the composition for foundry molds.

According to the present invention, it is possible to provide a binder composition for making foundry molds that contains a furan resin produced using phosphoric acid as an acid catalyst, has a small content of furfuryl alcohol, and is capable of suppressing precipitation of an insoluble phosphate while suppressing thickening at the time of storage of the binder composition for making foundry molds, a composition for making foundry molds, a composition for foundry molds, and a method for producing a foundry mold.

Hereinbelow, an embodiment of the present invention will be described.

### <Binder composition for making foundry molds>

A binder composition for making foundry molds according to the present embodiment (hereinafter also simply referred to as a binder composition) including:
furfuryl alcohol;
a furan resin;
water; and
a phosphate,
the binder composition satisfying Conditions (1) to (4) described below:
   Condition (1): the binder composition has a content of furfuryl alcohol of more than 0 mass% and 30 mass% or less,
   Condition (2): the binder composition has a content of the furan resin of 20 mass% or more and 60 mass% or less,
   Condition (3): the binder composition has a content of water of 5 mass% or more and 30 mass% or less, and
   Condition (4): the phosphate includes an amine phosphate.

According to the binder composition of the present embodiment, precipitation of an insoluble phosphate can be suppressed while thickening is suppressed. The reason why the binder composition exerts such an effect is not clear, but it is considered that using an alkylamine as a base component in neutralization of phosphoric acid improves the solubility of a resulting phosphate in the furan resin by an alkyl chain of the alkylamine to solubilize the phosphate while condensation of the furan resin is suppressed.

### [Furfuryl alcohol]

The binder composition has a content of furfuryl alcohol of 30 mass% or less, preferably 25 mass% or less, more preferably 20 mass% or less, and still more preferably 15 mass% or less from the viewpoint of improving the working environment. The binder composition preferably has a content of furfuryl alcohol of more than 0 mass%, more preferably 5 mass% or more, still more preferably 10 mass% or more, and even more preferably 15 mass% or more from the viewpoint of improving the mold strength. The content of furfuryl alcohol in the binder composition can be measured with the method described in Examples.

### [Furan resin]

The furan resin is obtained by polymerizing a monomer composition containing furfuryl alcohol using phosphoric acid as an acid catalyst, and can be used without particular limitation as long as the furan resin can be used as a binder for making foundry molds. The furan resin preferably contains one or more selected from the group consisting of condensates of furfuryl alcohol and urea, condensates of furfuryl alcohol and melamine, condensates of furfuryl alcohol and ethylene urea, condensates of furfuryl alcohol, urea, and an aldehyde (urea-modified furan resins), condensates of furfuryl alcohol, melamine, and an aldehyde, condensates of furfuryl alcohol, ethylene urea, and an aldehyde, a furfuryl alcohol condensate, condensates of furfuryl alcohol and an aldehyde, and condensates of furfuryl alcohol, a phenol, and an aldehyde, and one or more selected from the group consisting of co-condensates of two or more selected from the above-described group, and more preferably contains one or more selected from the group consisting of urea-modified furan resins, a furfuryl alcohol condensate, and condensates of furfuryl alcohol and an aldehyde, and one or more selected from the group consisting of co-condensates of two or more selected from the above-described group, from the viewpoint of significantly improving the mold strength while the content of furfuryl alcohol is reduced.

Examples of the aldehydes include formaldehyde, acetaldehyde, glyoxal, furfural, terephthalaldehyde, and hydroxymethylfurfural, and at least one of them can appropriately be used. From the viewpoint of improving the mold strength, formaldehyde is preferably used. From the viewpoint of reducing the amount of formaldehyde generated during molding, furfural, terephthalaldehyde, or hydroxymethylfurfural is preferably used.

Examples of the phenols include phenol, cresol, resorcin, bisphenol A, bisphenol C, bisphenol E, and bisphenol F, and at least one of them can be used.

The furan resin can be produced by a well-known method. For example, when the furan resin is a urea-denatured furan resin, the urea-denatured furan resin can be obtained by reacting 100 parts by mass of furfuryl alcohol with 0.6 to 30 parts by mass of urea and 0.4 to 50 parts by mass of paraformaldehyde, using phosphoric acid as an acid catalyst.

The total content of the one or more selected from the group consisting of urea-modified furan resins, a furfuryl alcohol condensate, and condensates of furfuryl alcohol and an aldehyde and the one or more selected from the group consisting of co-condensates of two or more selected from the above-described group in the furan resin is preferably 90 mass% or more, more preferably 95 mass% or more, still more preferably 98 mass% or more, even more preferably substantially 100 mass%, and still even more preferably 100 mass% from the viewpoint of significantly improving the mold strength while the content of furfuryl alcohol is reduced. In the present description, the term "substantially" means that another component may be contained at an amount such that the component can be regarded as an impurity.

The binder composition preferably has a content of the furan resin of 20 mass% or more, more preferably 30 mass% or more, and still more preferably 40 mass% or more from the viewpoint of improving the crosslinking density of the resin to improve the mold strength. The binder composition preferably has a content of the furan resin of 60 mass% or less, more preferably 50 mass% or less, and still more preferably 40 mass% or less from the viewpoint of maintaining good kneadability with the refractory aggregate to suppress deterioration of the mold strength. The furan resin content in the binder composition can be measured with the method described in Examples.

### [Water]

The binder composition has a content of water of 30 mass% or less, and preferably 25 mass% or less from the viewpoint of improving the mold strength. The binder composition preferably has a content of water of 5 mass% or more, more preferably 8 mass% or more, and still more preferably 10 mass% or more from the viewpoint of adjusting the viscosity of the binder composition. The content of water can be measured with the method described in Examples.

### [Phosphate]

The phosphate in the binder composition is obtained by neutralizing phosphoric acid used as an acid catalyst in production of the furan resin. The phosphate includes an amine phosphate. The amine included in the amine phosphate preferably includes one or more selected from the group consisting of alkylamines, alkanolamines, arylamines, and aralkylamines, from the viewpoint of suppressing generation of a precipitate.

Examples of the alkylamines include ethylamine, diethylamine, triethylamine, butylamine, dibutylamine, tributylamine, octylamine, dioctylamine, trioctylamine, dodecylamine, didodecylamine, tridodecylamine, stearylamine, and distearylamine.

Examples of the alkanolamines include monoethanolamine, monoisopropanolamine, diethanolamine, diisopropanolamine, di-2-hydroxybutylamine, N-methylethanolamine, N-ethylethanolamine, triethanolamine, and triisopropanolamine.

Examples of the arylamines include aniline. Examples of the aralkylamines include benzylamine and dibenzylamine.

The phosphate may include a metal phosphate amine salt. The metal element included in the metal phosphate amine salt preferably includes one or more selected from the group consisting of alkali metal elements such as sodium and potassium and alkaline earth metal elements such as magnesium and calcium.

The content of a base component included in the phosphate through neutralization in the binder composition is preferably 1 mol or more, more preferably 2.5 mol or more, and further preferably 3 mol or more with respect to 1 mol of phosphoric acid, from the viewpoint of suppressing thickening at the time of storage. The content of the base component included in the phosphate in the binder composition is preferably 3.5 mol or less, and more preferably 3 mol or less with respect to 1 mol of phosphoric acid, from the viewpoint of suppressing a decrease in hardening speed at the time of hardening of a foundry mold.

The content of an amine in the base component included in the phosphate is preferably 0.5 mol or more, and more preferably 1 mol or more with respect to 1 mol of phosphoric acid, from the viewpoint of suppressing generation of a precipitate.

The content of the metal element in the base component included in the phosphate is preferably 0.5 mol or less, and more preferably 0.3 mol or less with respect to 1 mol of phosphoric acid, from the viewpoint of suppressing generation of a precipitate.

The content of the phosphate in the binder composition is preferably 0.1 mass% or more, more preferably 0.3 mass% or more, and further preferably 0.5 mass% or more in terms of phosphoric acid, from the viewpoint of shortening the production time of the binder composition. The content of the phosphate in the binder composition is preferably 2 mass% or less, more preferably 1 mass% or less, and further preferably 0.5 mass% or less in terms of phosphoric acid, from the viewpoint of reducing the viscosity of the binder composition.

The average molecular weight of the phosphate calculated from the amount of added phosphoric acid and the kind and the amount of the added base is preferably 150 or more, and more preferably 200 or more, from the viewpoint of suppressing thickening at the time of storage. The average molecular weight of the phosphate is preferably 2000 or less, and more preferably 1500 or less, from the viewpoint of suppressing a decrease in strength of a foundry mold.

The content of the phosphate with respect to the solid content excluding water and the solvent in the binder composition is preferably 0.4 mass% or more, and more preferably 0.6 mass% or more in terms of phosphoric acid, from the viewpoint of shortening the production time of the binder composition. The content of the phosphate in the binder composition is preferably 2.5 mass% or less, more preferably 1.3 mass% or less, and further preferably 0.7 mass% or less in terms of phosphoric acid, from the viewpoint of reducing the viscosity of the binder composition.

### [Others]

### [Bishydroxymethylfuran]

The binder composition preferably contains bishydroxymethylfuran from the viewpoint of improving the mold strength while reducing the content of furfuryl alcohol, and from the viewpoint of low viscosity.

Bishydroxymethylfuran preferably contains one or more selected from the group consisting of 2,5-bishydroxymethylfuran and 3,4-bishydroxymethylfuran, and more preferably contains 2,5-bishydroxymethylfuran.

The binder composition preferably has a content of bishydroxymethylfuran of 5 mass% or more, more preferably 10 mass% or more, still more preferably 12 mass% or more, and even more preferably 15 mass% or more from the viewpoint of significantly improving the mold strength while the content of furfuryl alcohol is reduced, and the viewpoint of low viscosity. The binder composition preferably has a content of bishydroxymethylfuran of 35 mass% or less, more preferably 30 mass% or less, still more preferably 25 mass% or less, and still even more preferably 20 mass% or less from the viewpoint of improving the storage stability. The content of bishydroxymethylfuran can be measured with the method described in Examples.

### [Hardening promoter]

The binder composition may contain a hardening promoter from the viewpoint of improving the mold strength. From the viewpoint of improving the mold strength, the hardening promoter is preferably at least one selected from the group consisting of urea and urea derivatives, phenol derivatives, aromatic dialdehydes, and tannins.

The urea and the urea derivative are not subjected to a condensation reaction with formaldehyde, furfuryl alcohol, or the like, and may be those remaining as unreacted components, or those separately added.

Examples of the urea and the urea derivative in the binder composition include urea, alkylene ureas such as ethyleneurea, propyleneurea, butyleneurea, and hydantoin, alkyl ureas such as methylurea, 1,1-dimethylurea, and **1,3-**dimethylurea, cyclohexylureas such as cyclohexylurea and 1,3-dicyclohexylurea, arylureas such as phenylurea, **1,1-**diphenylurea, and 1,3-diphenylurea, hydroxyalkylureas having an alkyl group having 2 or more carbon atoms such as 2-hydroxyethylurea, and azodicarbonamide. These compounds can be used singly or in combination of two or more kinds thereof. Urea and ethyleneurea are preferable from the viewpoint of improving the hardening speed, improving the mold strength, and reducing the amount of generated formaldehyde, and urea is further preferable from the viewpoint of economic efficiency.

When the binder composition contains urea and urea derivatives, the content of urea and urea derivatives is preferably 0.5 % by mass or more, more preferably 1 % by mass or more, and still more preferably 1.5 % by mass or more from the viewpoints of improving the mold strength, and reducing the concentration of formaldehyde in the binder composition and the amount of formaldehyde released from the mold during casting. The content of urea and urea derivatives is preferably 8 % by mass or less, more preferably 7 % by mass or less, and still more preferably 6 % by mass or less from the viewpoints of improving mold strength and the storage stability of the binder composition.

Examples of the phenol derivatives include resorcin, cresol, hydroquinone, phloroglucinol, and methylene bisphenol. When the phenol derivatives are contained in the binder composition, the phenol derivatives content of the binder composition is preferably 1 to 25 mass%, more preferably 2 to 15 mass%, even more preferably 3 to 10 mass% from the viewpoints of improving the mold strength.

Examples of the aromatic dialdehydes include terephthalaldehyde, phthalaldehyde, and isophthalaldehyde, and derivatives thereof. The derivatives thereof refer to compounds each having an aromatic ring of an aromatic compound having two formyl groups as a basic skeleton and a substituent group, such as an alkyl group, attached to the aromatic ring. When the aromatic dialdehydes are contained in the binder composition, the aromatic dialdehydes content of the binder composition is preferably 0.1 to 15 mass%, more preferably 0.5 to 10 mass%, even more preferably 1 to 5 mass% from the viewpoints of sufficiently dissolving the aromatic dialdehyde in the furan resin and reducing the odor of the aromatic dialdehyde itself.

Examples of the tannins include condensed tannins and hydrolyzable tannins. Examples of the condensed tannins and hydrolyzable tannins include tannins having a pyrogallol skeleton and tannins having a resorcin skeleton. Alternatively, a bark extract containing such tannins or an extract containing such tannins from a natural product such as plant-derived leaves, fruits, or seeds or galls parasitic on plants may be added. When the tannins are contained in the binder composition, the tannins content of the binder composition is preferably 0.2 to 10 mass%, more preferably 1.0 to 7 mass%, even more preferably 1.9 to 5 mass% from the viewpoints of improving hardening speed, and improving the mold strength.

The binder composition may further contain an additive such as a silane coupling agent. For example, the binder composition preferably contains a silane coupling agent because the final strength of a resulting mold can further be improved. Examples of the silane coupling agent to be used include: aminosilanes such as N-β-(aminoethyl)-γ-aminopropylmethyldimethoxysilane, N-β-(aminoethyl)-γ-aminopropyltrimethoxysilane, N-β-(aminoethyl)-γ-aminopropyltriethoxysilane, and 3-aminopropyltrimethoxysilane; epoxysilanes such as 3-glycidoxypropyltrimethoxysilane, 3-glycidoxypropyltriethoxysilane, 3-glycidoxypropylmethyldimethoxysilane, 3-glycidoxypropylmethyldiethoxysilane, and 3-glycidoxypropyltriethoxysilane; ureidosilane; mercaptosilane; sulfidosilane; methacryloxysilane; and acryloxysilane. The silane coupling agent preferably includes one or more selected from the group consisting of aminosilane, epoxysilane and ureidosilane, more preferably one or more selected from the group consisting of aminosilane and epoxysilane. Aminosilanes preferably include N-β-(aminoethyl)-γ-aminopropyl methyl dimethoxysilane. Epoxysilanes preferably include 3-glycidoxypropylmethyldimethoxysilane.

When the binder composition contains the silane coupling agent, the silane coupling agent content of the binder composition is preferably 0.01 mass% or more, more preferably 0.05 mass% or more, and still more preferably 0.2 mass% or more from the viewpoint of improving the mold strength. From the same viewpoint, the silane coupling agent content of the binder composition is preferably 5 mass% or less, more preferably 3 mass% or less, still more preferably 1 mass% or less, and still more preferably 0.5 mass% or less.

The binder composition according to the present embodiment is suitably used for making self-hardening molds. Here, the self-hardening mold refers to a mold obtained by mixing sand with a binder composition and a hardening agent composition so that the mixture is hardened by a polymerization reaction proceeding with time. The temperature of the sand used at this time is in the range of -20°C to 50°C, preferably 0°C to 40°C. A mold can properly be hardened by adding a suitable amount of a hardening agent selected for sand having such a temperature to the sand.

### <Composition for making foundry molds>

A composition for making foundry molds according to the present embodiment includes: the binder composition; and a curing agent composition containing a curing agent capable of hardening the binder composition for making foundry molds. The composition for making foundry molds has the same effect as the binder composition.

### [Hardening agent composition]

The hardening agent composition to be used is not particularly limited as long as a hardening agent for hardening the above-described binder composition is contained. The hardening agent to be used may be, for example, at least one conventionally-known acid-based hardening agent, and examples thereof include sulfonic acid-based compounds such as xylene sulfonic acid (especially, m-xylene sulfonic acid), toluene sulfonic acid (especially, p-toluene sulfonic acid), and methanesulfonic acid, phosphoric acid-based compounds such as phosphoric acid and acidic phosphoric esters, and sulfuric acid or the like. These compounds are preferably in the form of an aqueous solution from the viewpoint of handleability. The hardening agent composition may further contain at least one solvent selected from the group consisting of alcohols, ether alcohols, and esters or a carboxylic acid.

The content of the solvent in the curing agent composition is appropriately adjusted in order to obtain a desired reaction rate and desired mold strength according to the temperature of the working environment and the temperature of the refractory particles, and is generally preferably 5 mass% or more, more preferably 10 mass% or more, and still more preferably 20 mass% or more from the viewpoint of dissolving the curing agent composition. The content of the solvent in the curing agent composition is preferably 90 mass% or less, more preferably 80 mass% or less, and still more preferably 70 mass% or less from the viewpoint of improving the mold strength.

From the viewpoint of improving the mold strength, the hardening agent content of the hardening agent composition is preferably 10 mass% or more, more preferably 20 mass% or more, and still more preferably 30 mass% or more. From the viewpoint of dissolving the hardening agent composition, the hardening agent content of the hardening agent composition is preferably 95 mass% or less, more preferably 90 mass% or less, still more preferably 80 mass% or less.

The mass ratio of the binder composition and the curing agent is preferably in the range of 10 to 60 parts by mass, more preferably in the range of 10 to 40 parts by mass, and still more preferably in the range of 10 to 30 parts by mass based on 100 parts by mass of the binder composition from the viewpoint of improving the hardening speed and improving the mold strength.

### <Composition for foundry molds>

A composition for foundry molds according to the present embodiment includes: refractory particles; the binder composition; and the curing agent composition. The composition for foundry molds has the same effect as the binder composition.

### [Refractory particles]

As the refractory particles, one or more kinds of conventionally known refractory particles such as silica sand, chromite sand, zircon sand, olivine sand, alumina sand, mullite sand, and synthetic mullite sand can be used, and for example, refractory particles obtained by collecting or regenerating used refractory particles can also be used. Among them, silica sand is preferably contained.

In the composition for foundry molds, the mass ratio among the refractory particles, the binder composition, and the curing agent can be appropriately set, but from the viewpoint of improving the hardening speed and improving the mold strength, the amount of the binder composition is preferably in the range of 0.5 to 1.5 parts by mass, and the amount of the curing agent is preferably in the range of 0.07 to 1 part by mass based on 100 parts by mass of the refractory particles.

### <Method for producing a mold>

A method for producing a mold according to the present embodiment includes: a mixing step of mixing the refractory particles, the binder composition, and the curing agent composition to obtain the composition for foundry molds; and a hardening step of filling a mold with the composition for foundry molds and hardening the composition for foundry molds. The method for producing a mold has the same effect as the binder composition.

In the mixing step, the order of adding and mixing the binder composition, the curing agent composition, and the refractory particles is not particularly limited, and the binder composition and the curing agent composition may be mixed to produce a composition for making foundry molds and then the composition for making foundry molds and the refractory particles may be mixed, or the binder composition, the curing agent composition, and the refractory particles may be separately added and mixed, but from the viewpoint of storage stability and productivity of a mold, the binder composition, the curing agent composition, and the refractory particles are preferably mixed to obtain a composition for foundry molds. From the viewpoint of improving the mold strength, it is preferable that the curing agent composition be added to and mixed with the refractory particles, and then the binder composition be added to and mixed with the resulting mixture. In the case of using two or more curing agent compositions, the curing agent compositions may be mixed and then added, or may be separately added.

A method for mixing raw materials to be used in the mixing step may be a well-known general method, and examples thereof include a method in which raw materials added to a batch mixer are kneaded and a method in which raw materials supplied to a continuous mixer are kneaded.

In the method for producing a mold, a conventional foundry mold production process can be used without change to produce a foundry mold, except for the mixing step.

### <Method for producing casting>

The method for producing a casting of the present embodiment includes a foundry mold production step of producing a foundry mold with the method for producing a foundry mold and a casting step of casting a metal using the foundry mold obtained in the foundry mold production step. The casting step may include a molding step of pouring a molten metal into the foundry mold, and a cooling step of cooling the molten metal poured into the foundry mold after the molding step. The method for producing a casting of the present embodiment may also include a foundry mold removal step of removing the foundry mold and taking out a casting after the cooling step. In the foundry mold removal step, the method of removing the foundry mold is, for example, a method of disassembling the foundry mold. In the production of a casting of the present embodiment, a casting can be produced using a conventional casting production process.

In relation to the above-described embodiment, the present invention further discloses the following compositions, and methods of manufacture, etc.
<1> A binder composition for making foundry molds, the binder composition including:
   furfuryl alcohol;
   a furan resin;
   water; and
   a phosphate,
   the binder composition satisfying Conditions (1) to (4) described below:
      Condition (1): the binder composition has a content of furfuryl alcohol of more than 0 mass% and 30 mass% or less,
      Condition (2): the binder composition has a content of the furan resin of 20 mass% or more and 60 mass% or less,
      Condition (3): the binder composition has a content of water of 5 mass% or more and 30 mass% or less, and
      Condition (4): the phosphate includes an amine phosphate.
<2> The binder composition for making foundry molds according to <1>, wherein the binder composition preferably has a content of furfuryl alcohol of 25 mass% or less and 5 mass% or more.
<3> The binder composition for making foundry molds according to <1> or <2>, wherein the furan resin preferably contains one or more selected from the group consisting of condensates of furfuryl alcohol and urea, condensates of furfuryl alcohol and melamine, condensates of furfuryl alcohol and ethylene urea, condensates of furfuryl alcohol, urea, and an aldehyde (urea-modified furan resins), condensates of furfuryl alcohol, melamine, and an aldehyde, condensates of furfuryl alcohol, ethylene urea, and an aldehyde, a furfuryl alcohol condensate, condensates of furfuryl alcohol and an aldehyde, and condensates of furfuryl alcohol, a phenol, and an aldehyde, and one or more selected from the group consisting of co-condensates of two or more selected from the above-described group.
<4> The binder composition for making foundry molds according to <3>, wherein a total content of the one or more selected from the group consisting of urea-modified furan resins, a furfuryl alcohol condensate, and condensates of furfuryl alcohol and an aldehyde and the one or more selected from the group consisting of co-condensates of two or more selected from the above-described group in the furan resin is preferably 90 mass% or more.
<5> The binder composition for making foundry molds according to any one of <1> to <4>, wherein the binder composition preferably has a content of the furan resin of 20 mass% or more and 60 mass% or less.
<6> The binder composition for making foundry molds according to any one of <1> to <5>, wherein the binder composition preferably has a content of water of 30 mass% or less and 5 mass% or more.
<7> The binder composition for making foundry molds according to any one of <1> to <6>, wherein the phosphate includes an amine phosphate, and wherein the amine phosphate preferably includes an amine including one or more selected from the group consisting of alkylamines, alkanolamines, arylamines, and aralkylamines.
<8> The binder composition for making foundry molds according to <7>, wherein the alkylamines preferably include one or more selected from the group consisting of ethylamine, diethylamine, triethylamine, butylamine, dibutylamine, tributylamine, octylamine, dioctylamine, trioctylamine, dodecylamine, didodecylamine, tridodecylamine, stearylamine, and distearylamine.
<9> The binder composition for making foundry molds according to <7> or <8>, wherein the alkanolamines preferably include one or more selected from the group consisting of monoethanolamine, monoisopropanolamine, diethanolamine, diisopropanolamine, di-2-hydroxybutylamine, N-methylethanolamine, N-ethylethanolamine, triethanolamine, and triisopropanolamine.
<10> The binder composition for making foundry molds according to any one of <7> to <9>, wherein the arylamines preferably include aniline.
<11> The binder composition for making foundry molds according to any one of <7> to <10>, wherein the aralkylamines preferably include one or more selected from the group consisting ofbenzylamine and dibenzylamine.
<12> The binder composition for making foundry molds according to any one of <1> to <11>, wherein the phosphate preferably includes a metal phosphate amine salt.
<13> The binder composition for making foundry molds according to <12>, wherein the metal element included in the metal phosphate amine salt preferably includes one or more selected from the group consisting of alkali metal elements such as sodium and potassium and alkaline earth metal elements such as magnesium and calcium.
<14> The binder composition for making foundry molds according to any one of <1> to <13>, wherein the content of a base component included in the phosphate through neutralization in the binder composition is preferably 1 mol or more and preferably **3.5** mol or less with respect to 1 mol of phosphoric acid.
<15> The binder composition for making foundry molds according to any one of <1> to <14>, wherein the content of an amine in the base component included in the phosphate is preferably **0.5** mol or more with respect to 1 mol of phosphoric acid.
<16> The binder composition for making foundry molds according to any one of <1> to <15>, wherein the content of the metal element in the base component included in the phosphate is preferably 0.5 mol or less.
<17> The binder composition for making foundry molds according to any one of <1> to <16>, wherein the content of the phosphate in the binder composition is preferably 0.1 mass% or more and preferably 2 mass% or less in terms of phosphoric acid.
<18> The binder composition for making foundry molds according to any one of <1> to <17>, wherein the average molecular weight of the phosphate calculated from the amount of added phosphoric acid and the kind and the amount of the added base is preferably 150 or more and preferably 2000 or less.
<19> The binder composition for making foundry molds according to any one of <1> to <18>, wherein the content of the phosphate with respect to the solid content excluding water and the solvent in the binder composition is preferably 0.4 mass% or more and preferably 2.5 mass% or less in terms of phosphoric acid.
<20> The binder composition for making foundry molds according to any one of <1> to <19>, wherein the binder composition preferably contains bishydroxymethylfuran.
<21> The binder composition for making foundry molds according to <20>, wherein bishydroxymethylfuran preferably contains one or more selected from the group consisting of 2,5-bishydroxymethylfuran and 3,4-bishydroxymethylfuran.
<22> The binder composition for making foundry molds according to <20> or <21>, wherein the binder composition preferably has a content of bishydroxymethylfuran of 5 mass% or more and 35 mass% or less.
<23> The binder composition for making foundry molds according to any one of <1> to <22>, wherein the binder composition preferably contains a silane coupling agent.
<24> The binder composition for making foundry molds according to <23>, wherein the silane coupling agent preferably includes one or more selected from the group consisting of aminosilanes, epoxysilanes, ureidosilane, mercaptosilane, sulfidosilane, methacryloxysilane, and acryloxysilane.
<25> The binder composition for making foundry molds according to <23> or <24>, wherein aminosilanes preferably include one or more selected from the group consisting of N-β-(aminoethyl)-γ-aminopropylmethyldimethoxysilane, N-β-(aminoethyl)-γ-aminopropyltrimethoxysilane, N-β-(aminoethyl)-γ-aminopropyltriethoxysilane, and 3-aminopropyltrimethoxysilane;
<26> The binder composition for making foundry molds according to any one of <23> to <25>, wherein epoxysilanes preferably include one or more selected from the group consisting of 3-glycidoxypropyltrimethoxysilane, 3-glycidoxypropyltriethoxysilane, 3-glycidoxypropylmethyldimethoxysilane, 3-glycidoxypropylmethyldiethoxysilane, and 3-glycidoxypropyltriethoxysilane.
<27> The binder composition for making foundry molds according to any one of <23> to <26>, wherein the silane coupling agent content of the binder composition is preferably 0.01 mass% or more and preferably 5 mass% or less.
<28> A composition for making foundry molds, the composition including:
   the binder composition for making foundry molds according to any one of <1> to <27>; and
   a curing agent composition containing a curing agent capable of hardening the binder composition for making foundry molds.
<29> A composition for foundry molds, the composition including:
   refractory particles;
   the binder composition for making foundry molds according to any one of <1> to <27>; and
   a curing agent composition containing a curing agent capable of hardening the binder composition for making foundry molds.
<30> A method for producing a foundry mold, the method including:
   a mixing step of mixing refractory particles, the binder composition for making foundry molds according to any one of <1> to <27>, and a curing agent composition containing a curing agent capable of hardening the binder composition for making foundry molds to obtain a composition for foundry molds; and
   a hardening step of filling a mold with the composition for foundry molds and hardening the composition for foundry molds.
<31> A method for producing a casting, the method including:
   a foundry mold production step of producing a foundry mold with the method for producing a foundry mold according to <30>; and
   a casting step of casting a metal using the foundry mold obtained in the foundry mold production step.
<32> The method for producing a casting according to <31>, wherein the casting step includes a molding step of pouring a molten metal into the foundry mold, and a cooling step of cooling the molten metal poured into the foundry mold after the molding step.
<33> The method for producing a casting according to <32>, including a foundry mold removal step of removing the foundry mold and taking out a casting after the cooling step.
<34> A foundry mold produced with the method for producing a foundry mold according to <30>.
<35> Use of the composition according to any one of <1> to <27> as a binder composition for making foundry molds. Examples

### <Methods of measuring physical properties>

### [Content of water]

Measurement was performed in accordance with the Karl-Fischer method shown in JIS K 0068 using an automatic water-content measuring instrument (AQV-2200A manufactured by Hiranuma Sangyo Co., Ltd.).

### [Contents of furfuryl alcohol and bishydroxymethylfuran]

Measurement was performed by gas chromatography analysis under the following conditions using gas chromatography (GC-2014S manufactured by SHIMADZU CORPORATION) .
- Solvent for diluting measurement samples: Methanol
- Calibration curve: Calibration curves for furfuryl alcohol and bishydroxymethylfuran were created using 1,6-hexanediol as the internal standard.
- Column: PEG-20M Chromosorb WAW DMCS 60/80 mesh (manufactured by GL Sciences Inc.)
- Column temperature: 80 to 200°C (8°C/min)
- Injection temperature: 210°C
- Detector temperature: 250°C carrier gas: 50 mL/min (He)

### [Viscosity]

Viscosity was measured with an E-type viscometer (RE-80R, manufactured by Toki Sangyo Co., Ltd.) at 25□C using a standard rotor (cone angle 1° 34', cone radius: 24 mm) at a rotation speed of 100 rpm.

### <Method of producing binder composition>

### [Example 1]

While stirred, 555.50 g of furfuryl alcohol, 4.13 g of triethylamine, 5.88 g of an 85 mass% phosphoric acid aqueous solution, and 157.10 g of 92 mass% paraformaldehyde were put into a three-necked flask equipped with a stirrer, a cooling tube, and a thermometer. The amount of triethylamine was 0.8 mol with respect to 1 mol of phosphoric acid. The mixture was reacted at 100°C until the amount of the furfuryl alcohol monomer reached 33 mass%. Then, 38.12 g of urea was added, and the resulting mixture was reacted at 105°C for 1 hour. Then, the mixture was air-cooled to 70°C, 18.66 g of urea was put into the flask, and the resulting mixture was reacted at 70°C for 20 minutes to obtain a reaction product containing a urea-modified furan resin. As a result of analyzing the obtained reaction product, the amount of furfuryl alcohol was 19.2 mass%, the amount of 2,5-bishydroxymethylfuran was 20.5 mass%, and the amount of water was 9.73 mass%. The amount of the furan resin (urea-modified furan resin) was regarded as the remaining amount obtained by subtracting the amounts of furfuryl alcohol, 2,5-bishydroxymethylfuran, and water and the calculated amount of the phosphate in the obtained reaction product. The amounts of furfuryl alcohol and water to be blended were calculated on the basis of the analysis results so as to obtain a binder composition having a content of furfuryl alcohol of 19 mass%, a content of the furan resin (urea-modified furan resin) of 35.45 wt%, and a content of water of 24 mass%. Furthermore, the amount of triethylamine to be blended was calculated so that the amount of triethylamine was 3 mol with respect to 1 mol of phosphoric acid in the binder composition. To the obtained reaction product, 40.00 g of furfuryl alcohol, 164.26 g of water, 11.36 g of triethylamine, and 5.00 g of a silane coupling agent (KBM-602 manufactured by Shin-Etsu Chemical Co., Ltd.) were added and mixed to obtain a binder composition of Example 1.

### [Examples 2 to 10 and Comparative Examples 1 to 2]

A binder composition of each of Examples 2 to 11 and Comparative Examples 1 to 2 was obtained in the same manner as in Example 1 except that a base component shown in Table 1 was used and the amount of the basic species was changed to achieve the amount of the neutralized salt of phosphoric acid. In Table **1,** FFA means furfuryl alcohol, and BHMF means 2,5-bishydroxymethylfuran.

### [Example 11]

Into a three-necked flask equipped with a stirrer, a cooling tube, and a thermometer, 531.78 g of furfuryl alcohol, 3.71 g of triethylamine, 165.17 g of 92 mass% paraformaldehyde, and 160.96 g of urea were put, and the resulting mixture was reacted under normal pressure at 110°C for 90 minutes. Then, 5.27 g of 85% phosphoric acid was put into the flask, and the resulting mixture was further reacted at 90°C for 240 minutes to obtain a reaction product. As a result of analyzing the obtained reaction product, the amount of furfuryl alcohol was 21.5 mass%, the amount of BHMF was 0 mass%, and the amount of water was 14.5 mass%. The amount of the furan resin (urea-modified furan resin) was calculated in the same manner as in Example **1.** The amounts of furfuryl alcohol and water to be blended were calculated on the basis of the analysis results so as to obtain a binder composition having a content of furfuryl alcohol of 19 mass% and a content of water of 24.0 mass%. Furthermore, the amount of triethylamine to be blended was calculated so that the amount of triethylamine was 3 mol with respect to 1 mol of phosphoric acid in the binder composition. To the obtained reaction product, 114.30 g of water, 10.17 g of triethylamine, and 5.00 g of a silane coupling agent (KBM-602 manufactured by Shin-Etsu Chemical Co., Ltd.) were added and mixed to obtain a binder composition of Example 11.

### [Evaluation of storage stability]

Into a 50 mL screw tube bottle (manufactured by AS ONE CORPORATION), 50 g of a binder composition for making foundry molds was put, the bottle was sealed and allowed to stand in a thermostatic chamber at 50°C, and the viscosity after the elapse of 30 days was measured with the viscosity measurement method described above. In the columns of evaluation of storage stability in Table 1, "0 day" in the columns of viscosity means the viscosity of a binder composition for making foundry molds on the day when the binder composition for making foundry molds was produced, and "after 30 days" means the viscosity of a binder composition for making foundry molds after the elapse of 30 days. From the viscosities described in the columns of "0 day" and "after 30 days", the rate of change in viscosity was determined with the following formula, and the rate of change was used in evaluation of the storage stability. In this evaluation, an acceleration test was performed at a temperature higher than the normal storage temperature, and therefore it is considered that there is no problem as long as the rate of change in viscosity is less than 50%. Rate of change (%) = (viscosity after 30 days - viscosity at 0 day)/viscosity at 0 day × 100

### [Evaluation of presence or absence of precipitate]

In a 50 mL screw tube bottle (manufactured by AS ONE CORPORATION), 30 g of a binder composition for making foundry molds was put, and the bottle was sealed and allowed to stand for 1 day. Then, the presence or absence of a precipitate deposited on the bottom of the screw can bottle was visually confirmed.

**[Table 1]**

| | Binder composition for making foundry molds | | | | | | | | | Evaluation | | | |
|---|---|---|---|---|---|---|---|---|---|---|---|---|---|
| | FFA (mass%) | Furan resin (mass % ) | Water (mass% ) | Phosphate | | | | BHMF (mass%) | Silane coupling agent (mass% ) | Evaluation of storage stability | | | Presence or absence of precipitate |
| | | | | Kind | (mass) | Base component | Amount (mol) of base component with respect to 1.0 mol of phosphoric acid | | | Viscosity (mPa·s) | | | |
| | | | | | | Kind | | | | 0 day | After 30 days | Rate of change_{*)} | |
| Example 1 | 19.00 | 38.45 | 24.00 | Phosphoric acid/3 triethylamine | 2.05 | Triethylamine | 3.00 | 16.00 | 0.50 | 46 | 51 | 11 | Absent |
| Example 2 | 19.00 | 39.48 | 24.00 | Phosphoric acid/triethylamine | 1.02 | Triethylamine | 1.00 | 16.00 | 0.50 | 47 | 66 | 40 | Absent |
| Example 3 | 19.00 | 35.84 | 24.00 | Phosphoric acid/3 trioctylamine | 5.91 | Trioctylamine | 3.00 | 14.75 | 0.50 | 50 | 54 | 8 | Absent |
| Example 4 | 19.00 | 37.97 | 24.00 | Phosphoric acid/3 triethanolamine | 2.78 | Triethanolamine | 3.00 | 15.75 | 0.50 | 48 | 52 | 8 | Absent |
| Example 5 | 19.00 | 37.54 | 24.00 | Phosphoric acid/3 triisopropanolamine | 3.43 | Triisopropanolamine | 3.00 | 15.53 | 0.50 | 49 | 54 | 10 | Absent |
| Example 6 | 19.00 | 38.73 | 24.00 | Phosphoric acid/3 butylamine | 1.62 | Butylamine | 3.00 | 16.15 | 0.50 | 45 | 50 | 11 | Absent |
| Example 7 | 19.00 | 38.39 | 24.00 | Phosphoric acid/3 benzylamine | 2.14 | Benzylamine | 3.00 | 15.97 | 0.50 | 46 | 51 | 11 | Absent |
| Example 8 | 19.00 | 38.17 | 24.00 | Phosphoric acid/3 dibutylamine | 2.48 | Dibutylamine | 3.00 | 15.85 | 0.50 | 47 | 52 | 11 | Absent |
| Example 9 | 19.00 | 39.37 | 24.00 | Partially neutralized phosphoric acid with sodium hydroxide and triethylamine | 0.81 | Sodium hydroxide | 0.50 | 16.52 | 0.50 | 45 | 63 | 40 | Absent |
| | | | | | | Triethylamine | 0.50 | | | | | | |
| Example 10 | 19.00 | 38.79 | 24.00 | Phosphoric acid/3 triethylamine | 2.07 | Triethylamine | 3.00 | 16.15 | 0.00 | 46 | 52 | 13 | Absent |
| Example 11 | 19.00 | 54.73 | 24.00 | Phosphoric acid/3 triethylamine | 1. 84 | Triethylamine | 3.00 | 0.00 | 0.50 | 258 | 292 | 13 | Absent |
| Comparative Example 1 | 19.00 | 39.22 | 24.00 | Phosphoric acid/3 sodium | 0.84 | Sodium hydroxide | 3.00 | 16.44 | 0.50 | 46 | 51 | 11 | Present |
| Comparative Example 2 | 19.00 | 39.37 | 24.00 | Sodium phosphate | 0.61 | Sodium hydroxide | 1.00 | 16.52 | 0.50 | 46 | 64 | 39 | Present |

| | | | | | | | | | | | | | |
|---|---|---|---|---|---|---|---|---|---|---|---|---|---|
| *) Rate of change (%) = (viscosity after 30 days - viscosity at 0 day)/viscosity at 0 day × 100 | | | | | | | | | | | | | |

## Claims

1. A binder composition for making foundry molds, the binder composition comprising:
furfuryl alcohol;
a furan resin;
water; and
a phosphate,
the binder composition satisfying Conditions (1) to (4) described below:
Condition (1): the binder composition has a content of furfuryl alcohol of more than 0 mass% and 30 mass% or less,
Condition (2): the binder composition has a content of the furan resin of 20 mass% or more and 60 mass% or less,
Condition (3): the binder composition has a content of water of 5 mass% or more and 30 mass% or less, and
Condition (4): the phosphate includes an amine phosphate.

2. The binder composition for making foundry molds according to claim 1, wherein the amine phosphate includes an amine including one or more selected from the group consisting of alkylamines, alkanolamines, arylamines, and aralkylamines.

3. The binder composition for making foundry molds according to claim 1 or 2, having a content of the phosphate of 0.1 mass% or more and 2 mass% or less in terms of phosphoric acid.

4. The binder composition for making foundry molds according to any one of claims 1 to 3, wherein the furan resin contains one or more selected from the group consisting of urea-modified furan resins, furfuryl alcohol condensates, and condensates of furfuryl alcohol and an aldehyde, and one or more selected from the group consisting of co-condensates of two or more selected from the group described above.

5. The binder composition for making foundry molds according to any one of claims 1 to 4, having a content of a base component included in the phosphate, the content of 1 mol or more and 3.5 mol or less with respect to 1 mol of phosphoric acid.

6. A composition for making foundry molds, the composition comprising:
the binder composition for making foundry molds according to any one of claims 1 to 5; and
a curing agent composition containing a curing agent capable of hardening the binder composition for making foundry molds.

7. A composition for foundry molds, the composition comprising:
refractory particles;
the binder composition for making foundry molds according to any one of claims 1 to 5; and
a curing agent composition containing a curing agent capable of hardening the binder composition for making foundry molds.

8. A method for producing a foundry mold, the method comprising:
a mixing step of mixing refractory particles, the binder composition for making foundry molds according to any one of claims 1 to 5, and a curing agent composition containing a curing agent capable of hardening the binder composition for making foundry molds to obtain a composition for foundry molds; and
a hardening step of filling a mold with the composition for foundry molds and hardening the composition for foundry molds.

9. A method for producing a casting, the method comprising:
a foundry mold production step of producing a foundry mold with the method for producing a foundry mold according to claim 8; and
a casting step of casting a metal using the foundry mold obtained in the foundry mold production step.

10. A foundry mold produced with the method for producing a foundry mold according to claim 8.
